# EUROPEAN PATENT SPECIFICATION

(11) **EP 4 131 033 B1**
(45) Date of publication and mention of the grant of the patent: **21.10.2026**
(21) Application number: 22198205.1
(22) Date of filing: 25.01.2019
(51) Int. Cl.: H04L 9/40, G06F 21/64, G06F 21/10, G06F 21/60, G06F 21/62, G06F 21/51, H04L 9/32

(54) **SECURE STORAGE OF DATA AND HASHES VIA A DISTRIBUTED LEDGER SYSTEM**
SICHERE SPEICHERUNG VON DATEN UND HASHS ÜBER EIN VERTEILTES LEDGER-SYSTEM
STOCKAGE SÉCURISÉ DE DONNÉES ET DE HACHAGES PAR L'INTERMÉDIAIRE D'UN SYSTÈME DE REGISTRE DISTRIBUÉ

(30) Priority: 25.01.2018 US 201815880193; 25.01.2018 US 201815880209
(43) Date of publication of application: 08.02.2023
(62) Document number(s) of the earlier application(s) in accordance with Art. 76 EPC: 19706064.3 / 3 743 835
(73) Proprietor: Fortress Cyber Security, LLC, Orlando, FL 32801 (US)
(72) Inventor: NENOV, Dejan, Orlando 32801 (US); KASSABOV, Roumen, Orlando 32801 (US)
(74) Representative: Murgitroyd & Company

(56) References cited:
- GB-A- 2 551 643
- KR-A- 20170 137 388
- US-A1- 2017 134 162

## Description

### Related Applications

The present application claims the benefit of and priority to U.S. Nonprovisional Application No. 15/880,193, entitled "Secure Storage of Data via a Distributed Ledger System," filed January 25, 2018; and to U.S. Nonprovisional Patent Application No. 15/880,209, entitled "Secure Storage of Hashes within a Distributed Ledger," filed January 25, 2018.

### Background

To prevent corruption or loss of data, many computing systems back up said data in online, offsite storage, such as in cloud storage services. The stored data may, in some instances, be private user data, such as network activity or other personal or sensitive information. In some implementations, the computing systems may back up data from other computing systems; for example, some network devices may collect and store data from other devices within a local area network, and store the data in a remote data site.

However, the remote data site represents a single point of failure or attack surface for malicious actors and hackers: access to the remote data site may expose private or sensitive data from not just one device, but many devices.

Similarly, computing devices may receive periodic updates to firmware and software, including system files, anti-virus libraries, configuration files, or other such data. These updates are frequently intended to fix security flaws or holes in prior versions of the firmware or software; however, if the provided update is, itself, corrupted or the system providing the update has been compromised, the update may infect the computing device with malicious software or malware. GB 2552643 is considered to be a relevant prior-art document in the field of identifying whether firmware and software of devices are compromised.

### Summary

The invention is defined in the independent claims.

The present disclosure describes a use of a distributed ledger system to securely store data. Distributed ledger systems, sometimes referred to as block chains, are online data storage systems with cryptography-based architecture providing links between records stored in "blocks". Each block contains a hash of a previous block, providing a chain of linked blocks that are immutable: any alteration of a record changes the hash of the subsequent block, which changes the hash of the next subsequent block, etc. Accordingly, any modification of data is easily detectable.

Encrypted data files of one or more computing devices may be stored in the records, and distributed to processing nodes of the distributed ledger system. The data may be subsequently retrieved and decrypted by the computing device (or another device, such as during a restore operation after device failure). Because the distributed ledger system creates a chain of hashes of prior blocks, the data may be immune to modification or corruption, as any changes to blocks storing the encrypted data may be immediately apparent. Thus, even if storage or backup servers or nodes of the ledger system are subsequently compromised, the immutable nature of the ledger system prevents an attacker from modifying the encrypted data to deceive client devices into executing malware. Storing this sensitive data on a distributed ledger system therefore greatly reduces the attack surface hackers can exploit, anonymizes user data, and prevents rogue company employees from violating customer privacy.

The present disclosure also describes a use of a distributed ledger system to provide a secure anti-tamper mechanism for software and firmware updates that may be independently accessed and verified by any device. Distributed ledger systems, sometimes referred to as block chains, are online data storage systems with cryptography-based architecture providing links between records stored in "blocks". Each block contains a hash of a previous block, providing a chain of linked blocks that are immutable: any alteration of a record changes the hash of the subsequent block, which changes the hash of the next subsequent block, etc. Accordingly, any modification of data is easily detectable.

The results of cryptographic hash functions applied to inputs of system or firmware updates provided by a trusted server may be stored in the records. Other devices may receive the updates, generate corresponding hash results, and compare the results to those stored in the ledger system to verify that the received updates have not been compromised by malicious attackers or man-in-the-middle attacks or otherwise corrupted. Even if the trusted server is subsequently compromised, the immutable nature of the ledger system prevents an attacker from modifying the recorded hashes to deceive client devices into executing malware.

### Brief Description of the Figures

FIG. 1A is a block diagram of an embodiment of a computing environment for secure storage of data within a distributed ledger system;
FIG. 1B is a block diagram of an embodiment of a system providing secure storage of data within a distributed ledger system;
FIG. 2 is a block diagram of embodiments of source and accessing devices;
FIG. 3 is a flow chart of an embodiment of a method for secure storage of data within a distributed ledger system;
FIG. 4 is a block diagram of an embodiment of a computing environment for secure storage of hashes within a distributed ledger system;
FIGs. 5A-5B are block diagrams of embodiments of servers and computing devices;
FIG. 6 is a flow chart of an embodiment of a method for secure storage and verification of hashes within a distributed ledger system; and
FIG. 7 is a block diagram of an exemplary computing device useful for practicing the methods and systems described herein.

In the drawings, like reference numbers generally indicate identical, functionally similar, and/or structurally similar elements.

### Detailed Description

The following description in conjunction with the above-referenced drawings sets forth a variety of embodiments for exemplary purposes, which are in no way intended to limit the scope of the described methods or systems. Those having skill in the relevant art can modify the described methods and systems in various ways without departing from the broadest scope of the described methods and systems. Thus, the scope of the methods and systems described herein should not be limited by any of the exemplary embodiments and should be defined in accordance with the accompanying claims and their equivalents.

To prevent corruption or loss of data, many computing systems back up said data in online, offsite storage, such as in cloud storage services. The stored data may, in some instances, be private user data, such as network activity or other personal or sensitive information. The data may include, without limitation, user data, system files, anti-virus libraries, configuration files, passwords or user account information, or other such data.

In some implementations, the computing systems may back up data from other computing systems; for example, some network devices may collect and store data from other devices within a local area network (LAN), and store the data in a remote data site. For example, in one such implementation, a first computing system may comprise a security device deployed on or managing a LAN and devices connected to the LAN. The security device may retrieve data from other devices on the network for backup and/or offsite storage. This data may include firmware or configuration data of other devices within the network, including network configurations of devices, filter or quality of service settings applied to devices, or any other such information.

However, the remote data site represents a single point of failure or attack surface for malicious actors and hackers: access to the remote data site may expose private or sensitive data from not just one device, but many devices. For example, if configuration data for a plurality of devices is gathered by a security device and backed up to a single remote server, access to that server may result in complete exfiltration of the data, potentially compromising network security.

Accordingly, instead in some implementations, it may be desirable to securely backup data via a distributed ledger system with no single point of failure. Distributed ledger systems, sometimes referred to as block chains, are online data storage systems with cryptography-based architecture providing links between records stored in "blocks". Each block contains a hash of a previous block, providing a chain of linked blocks that are immutable: any alteration of a record changes the hash of the subsequent block, which changes the hash of the next subsequent block, etc. Accordingly, any modification of data is easily detectable.

Encrypted data files of one or more computing devices may be stored in the records, and distributed to processing nodes of the distributed ledger system. The data may be subsequently retrieved and decrypted by the computing device (or another device, such as during a restore operation after device failure). Because the distributed ledger system creates a chain of hashes of prior blocks, the data may be immune to modification or corruption, as any changes to blocks storing the encrypted data may be immediately apparent. Thus, even if storage or backup servers or nodes of the ledger system are subsequently compromised, the immutable nature of the ledger system prevents an attacker from modifying the encrypted data to deceive client devices into executing malware. Storing this sensitive data on a distributed ledger system therefore greatly reduces the attack surface hackers can exploit, anonymizes user data, and prevents attackers from violating customer privacy or acquiring sensitive data.

Although typically discussed with records indicating transactions between users, block chains may be used to store any type of data, either in raw form or encrypted. In some implementations, block chains may include executable code that is processed by computing devices, sometimes referred to as nodes or miners, during each iteration of the block chain. This code may be sometimes referred to as a smart contract. Transactions and/or smart contracts (along with other data, parameters, etc.) may be provided to a node. The node may process the contracts and record the transactions to a ledger, along with the cryptographic hash of the previous block, and distribute the new resulting block to other nodes in the network.

Thus, in some implementations, a smart contract may maintain a data array with encrypted data and/or other data, and associated index entries corresponding to access keys to provide secure or private access to the data. For example, in some implementations, encrypted data may be stored within the array associated with an access key; the access key may be subsequently provided to the smart contract to retrieve the associated encrypted data. In some implementations, to reduce storage requirements within the block chain, data may be compressed. In other implementations, only a subset of data may be stored (e.g. configuration data). This may reduce computation requirements of the block chain (for example, various block chain systems may place a limit on processing, storage, and bandwidth per block).

The same device or other devices, sometimes referred to as client devices, may retrieve and decrypt the data stored in the distributed ledger system, either to restore data in case of loss or corruption or malicious attack; or to verify that presently stored data has not been corrupted or compromised. For example, a security device may store configuration data in the ledger system for a device, and then periodically retrieve the configuration data from the ledger system and from the device. The security device may compare the two sets of retrieved data (e.g. directly, or via a comparison of the results of a hashing algorithm applied to the data, such as MD5 or SHA256). Because the distributed ledger is immutable, if the two sets of data (or hashes) do not match, then the security device may identify the client device as potentially compromised by malicious attackers or man-in-the-middle attacks or otherwise corrupted.

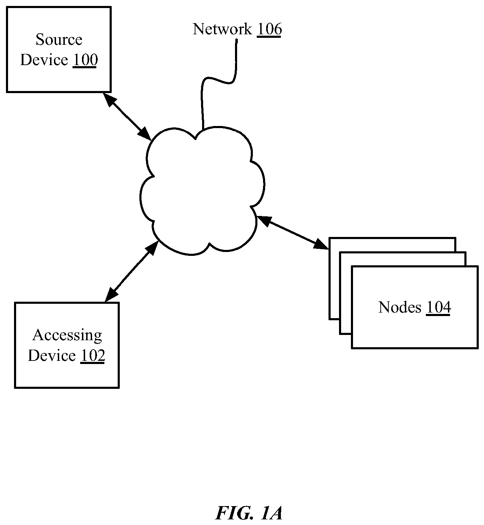

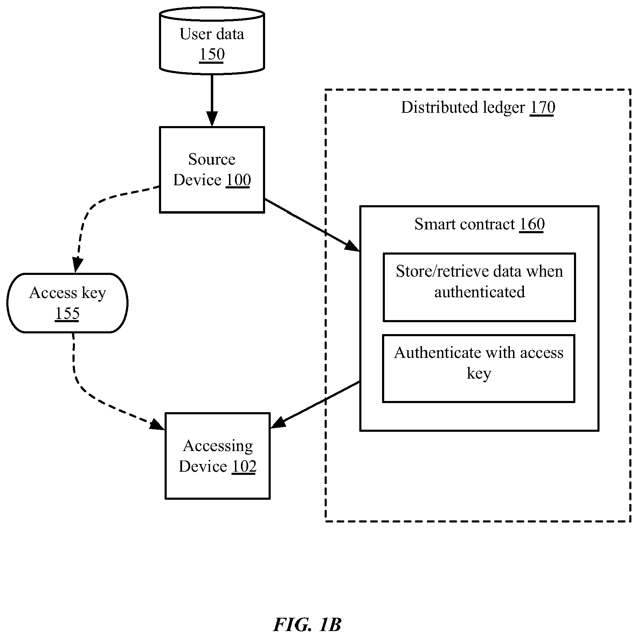

For example, referring first to FIG. 1, illustrated is a computing environment comprising a source device 100, an accessing device 102 (referred to generally as client devices, clients, local or internal devices, server devices, servers, host devices, hosts, or computing devices 100, 102), and nodes 104 (sometimes referred to as full nodes, miners, pools, or by other such terms), via one or more networks 106.

Source device 100, sometimes referred to as a secure device, a trusted device (although this trust may be temporary, such as instances where the source device is subsequently compromised), security server, manufacturer device, or by other such terms, may comprise a computing device that is configured to receive or produce an initial version of data or executable code to be distributed to computing device(s) 102, to compress and/or encrypt the data, and generate a transaction or execute a smart contract to write the encrypted data or code to a ledger of a distributed ledger system (e.g. via a node 104). In many implementations, a source device 100 may be a network security device, such as a switch, router, or gateway providing security services to a home network (e.g. deployed as an intermediary between a first network 106 and a second network 106 (not illustrated) to which one or more additional computing devices (not illustrated) are connected). Source device 100 may thus provide security functions to a home network, business network, or local area network (LAN), such as a firewall, packet inspection and/or filtering, network address translation, caching, acceleration, or any other such features. In other implementations, a source device 100 may be a trusted server of a manufacturer or software or firmware provider, and may be an update server, online store, cloud data provider, or other such entity. Source device 100 may provide security through encryption and distribution of data to a ledger system, as discussed above.

Source device 100 may comprise a hardware device, such as an appliance, desktop computer, rackmount computer, laptop computer, or any other such device. In some implementations, source device 100 may comprise a virtual device executed by a physical computing device, such as a virtual appliance executed by a physical machine having a hypervisor. Source device 100 may comprise one or more devices, such as a server farm, cluster, or cloud.

As discussed above, in some implementations, source device 100 may back up data of the source device via the distributed ledger system; in other implementations, source device 100 may back up data of other devices via the ledger, such as devices on a LAN for which the source device provides security functions or management. Thus, though referred to as a "source", source device 100 may not be the initial source of the data, but may be the source providing the data to the ledger system.

In some implementations, network 106 may be provided by a source device 100, such as via a built-in network switch, WiFi access point, etc. In other implementations, one or more network management devices (not illustrated) may be connected to a source device 100 and provide network 106. For example, a network management device, such as a router, gateway, WiFi access point, or other such device, may be an intermediary between source device 100 and network 106, and may provide functionality for network 106 and communications to one or more computing devices, security sensors automation devices, and/or appliances or consumer devices. Accordingly, in some implementations, communications to networked devices from source device 100 may flow through network management devices. Source device 100 may accordingly also provide security for network management devices (e.g. protection from unauthorized access to configuration or control functions, etc.).

As discussed above, source devices 100 may receive trusted or original versions of data, including user data, configuration data, software and/or firmware updates, applications, system libraries, or any other such data, either from the source device or another computing device. The trusted or canonical version may be explicitly or manually trusted by an administrator or manufacturer of the data, or may be digitally signed (e.g. by a certificate authority) to establish a chain of trust. To provide for secure distribution of the data, the source device 100 may optionally compress the data, and/or encrypt the data. The source device 100 may generate a transaction for the ledger system or remote procedure call to be executed by a node 104 executing a smart contract to write the encrypted data into the ledger. The data may be written to the ledger along with an identifier of the data, which may comprise a private access key to be provided securely to accessing devices. In some implementations, the source device may generate a request to execute a transaction, the request comprising the identifier or access key and the data. The data and the access key may be recorded in the ledger in an array or as a parameter-value pair, and may be independently retrievable by computing devices 100, 102.

In some implementations, a source device 100 may retrieve the trusted version of the data from another source, such as a manufacturer computing device or server, and then provide the data for wider distribution, e.g. via a peer-to-peer network. This may allow for efficient distribution to accessing devices 102 and large scalability without burdening the manufacturer computing device or server, or the source device 100. While such distribution systems are normally prone to security holes and man-in-the-middle attacks, placing hashes of the data in the immutable distributed ledger for retrieval and comparison by accessing device(s) 102 mitigates or prevents such attacks. Accordingly, the resulting distribution system is highly scalable and secure.

Accessing devices 102 may comprise any type and form of computing device, including laptop computers, desktop computers, tablet computers, wearable computers, embedded computers, video game consoles, entertainment systems, "smart" appliances such as smart televisions, smart thermostats, or any other such smart appliance, home automation appliances, energy management devices (e.g. battery backup systems, generators, power conditioners, etc.), or any other such device. **In** some implementations, accessing devices 102 may be deployed within other devices, such as computing devices within cars (e.g. head units). Although shown separate from source device 100, in many implementations, a source device may be an accessing device (and vice versa). Accessing devices 102 may be physical devices, virtual devices executed by one or more physical devices, or a combination of physical and virtual devices. Accessing devices 102 may execute software and/or firmware, and may receive data via network 106. As discussed above, in order to retrieve data from a distributed ledger, an accessing device 102 may retrieve or receive the data using an access key provided by a source device, administrator, or user. In some implementations, the accessing device 102 may generate a transaction or remote procedure call to retrieve the hash result from the distributed ledger via the identifier, for example when a node 104 executes a smart contract to process the transaction or RPC. In other implementations, the accessing device 102 may retrieve the array or transaction corresponding to the data identifier from a node 104 via the access key, and retrieve the data placed by source device 100. In some implementations, the accessing device 102 may compare local data or a locally-generated hash of the data and the corresponding retrieved data or a hash of the data. If the values match, then the data is identical to the canonical copy, and the accessing device 102 may confirm that it has not been compromised or corrupted. If the values do not match, then the data on the local device has been modified, corrupted, or compromised. The accessing device 102 may notify an administrator or user, may discard the data, and/or may take other mitigation actions (e.g. generating a backup of user data or configurations, locking the system, identifying other device(s) that provided the data as potentially compromised, etc.).

As discussed above, nodes 104 may comprise computing devices used to generate blocks of the ledger, record transactions, execute smart contracts, and generate cryptographic hashes of other block data and/or block contents. Nodes 104 may each comprise one or more computing devices, such as desktop computing devices, rackmount computing devices, laptop computing devices, appliances, clusters, server farms, or any other type and form of computing devices. In many implementations, a large number of physical computing devices will be configured to operate together for generating blocks and processing transactions, e.g. as a pool or swarm.

Networks 106 may comprise any type and form of network, including a local area network (LAN), wide area network (WAN) such as the Internet, a wireless network, a cellular network, a satellite network, a cable network, or any combination of these or other networks. Additional devices not illustrated may be deployed on networks 106, including switches, gateways, routers, firewalls, or other such devices. Computing devices 100, 102, 104 may comprise any type and form of computing device, including desktop computers, laptop computers, tablet computers, smart phones, smart televisions, game consoles, wearable computers, networked devices or appliances such as IoT devices, server computers, workstations, or any other type and form of networked computing device, and may be variously referred to as servers, clients, hosts, remote devices, local devices, or by any other such name.

FIG. 1B is another block diagram of a system for secure storage of data in a distributed ledger, according to some implementations. User data 150, which may comprise any type and form of data, such as configuration files, personal data, applications, system files, or any other data, may be retrieved by a source device 100 and stored, e.g. via a transaction written to a smart contract 160 of a distributed ledger 170. The data may be encrypted and stored in association with an access key 155, which may be used as an address (e.g. a wallet, an identifier, an account name, or any other similar identifiers) by the smart contract 160 for storing and retrieving the data. As shown, the access key 155 may be provided to an accessing device 102 (which may be the same as source device 100 or a different device). The accessing device 102 may authenticate with the smart contract 160 via the access key 155 (e.g. as a source address or wallet or similar identifier), and may retrieve the encrypted data in the ledger. The access key 155 may be a random number or string, or may be generated based on device identifiers, user names, public keys of key pairs used to encrypt data, etc. In one such implementation, the access key 155 may be a public key, and a private key may be similarly privately distributed or provided to accessing device 102. The accessing device 102 may retrieve the encrypted data using the public key as an address or authentication identifier, and may decrypt the data using the private key. For example, many implementations of distributed ledgers use public keys as addresses or "wallets" for account holders. The corresponding private key for decrypting data stored in association with the public address may be provided via a separate distribution means to the accessing device (e.g. offline or via a separate, secure channel).

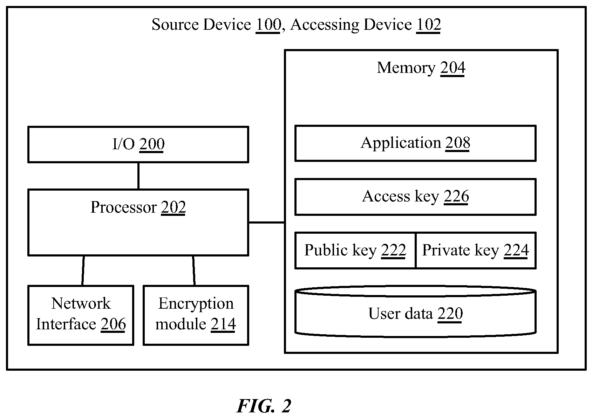

FIG. 2 is a block diagram of embodiments of servers and computing devices, such as source devices 100, accessing devices 102, and nodes 104. As discussed above, a source device 100 may comprise a laptop computer, desktop computer, wearable computer, portable computer, smart phone, tablet computer, rack mount computer, blade server, appliance, or any other type and form of device. **In** some implementations, a source device 100 or accessing device may not include all of elements 200-226 illustrated, or may include a plurality of any of elements 200-226 or other elements. For example, in one implementation, a source device 100 or accessing device 102 may comprise a plurality of network interfaces 206. Furthermore, although illustrated as a single device, in many implementations as discussed above, a source device 100 or accessing device 102 may comprise a plurality of devices in communication via a network, such as a separate switch and firewall, or any other combination of these or other devices. In some implementations, a source device 100 or accessing device 102 may comprise a virtual device or virtual machine, executed by a physical machine.

A source device 100 or accessing device 102 may include one or more processors 202. A processor 202 may comprise a central processing unit (CPU), microprocessor, application-specific instruction-set (ASIC) processor, or any other type and form of processor for receiving, analyzing, filtering, blocking, modifying, and/or retransmitting packets, and processing sensor signals and applying correlation rules. A processor 202 may communicate with one or more network interfaces 206, which may comprise any type and form of network interfaces, such as a physical interface (e.g. Ethernet, fiber optic interface, or any other such interface), a wireless interface (e.g. 802.11a, 802.11b, 802.11.g, 802.11n, 802.11ac, Bluetooth, cellular, or any other such interface), or a virtual or abstract interface (e.g. physical transport of storage, or "SneakerNet"), or any other such type and form of interface. Network interfaces 206 may be used for receiving and transmitting packets, as well as performing many types of data extraction and processing on the packets. Network interfaces 206 may communicate with other source devices 100 or accessing devices 102 and nodes 104 via a network 106 (not illustrated), which may comprise any type and form of network or networks, including a LAN and/or WAN such as the Internet. For example, in many implementations, a source device 100 or accessing device 102 may connect to a first LAN, which may connect to the Internet, which may further connect to a second LAN connected to client devices. Accordingly, a network may comprise one or more of a physical network, an Ethernet network, a satellite network, a wireless network, a cellular network, or any other network or combination of networks, and may further comprise one or more devices including gateways, firewalls, network accelerators, proxies, switches, hubs, routers, WiFi access points, load balancers, or any other such devices.

Although a network interface may typically refer to computer networks or even packet-based networks, a network may also refer to serial or parallel connections to sensors, relays, motors, or other security devices. Accordingly, as shown, in many implementations network interface 206 may also refer to serial connections, GPIO connections, as well as WiFi interfaces, Bluetooth interfaces, Ethernet interfaces, power line communications interfaces, or other interfaces not illustrated. In other implementations, some or all of these features may be provided separately from network interface 206.

A network interface may include a network stack, which may comprise processing and functionality for a plurality of layers of the stack, including a physical layer, network layer, transport layer, session layer, presentation layer, application layer, or any other such layers. The network stack may comprise routines for encapsulating and de-encapsulating headers and payloads of packets at various layers, and may provide functionality for one or more protocols at any layer of the network stack.

A source device 100 or accessing device 102 may execute a packet processing engine, which may be part of the network interface 206 or network stack, or may be executed separately by a processor 202. A packet processing engine may comprise an application, service, server, daemon, routine, or other executable logic for processing packets, including performing network address translation, encryption, decryption, compression, decompression, modification of headers or payloads, buffering, caching, pooling, multiplexing, fragmentation or defragmentation, error correction, retransmission handling such as for a lossless protocol, or any other type and form of processing. In some implementations, a packet processing engine may extract data or identifiers from a packet for analysis and filtering, such as extracting IP addresses or ports, protocol types, QoS parameters, payload sizes, sequence numbers, or any other type and form of information.

A source device 100 or accessing device 102 may comprise one or more input/output interfaces 200. An input or output interface 200 may comprise any type and form of interface and/or connected peripherals, such as a video interface and display; a parallel or serial interface, such as a universal serial bus (USB) interface and a mouse or keyboard, or an external serial AT attachment (eSATA) interface and one or more external storage devices; or any other type and form of interface.

A source device 100 or accessing device 102 may comprise one or more memory devices 204. Memory 204 may comprise any type and form of memory or storage, including random access memory (RAM), hard drive storage, solid state drive storage, flash memory, optical or magneto-optical storage, tape storage, or any other type and form of storage device.

In some implementations, a source device 100 or accessing device 102 may execute an application 208. Application 208 may comprise an applet, server, daemon, service, routine, or other executable log for generating transactions, performing cryptographic hashing algorithms, and communicating with nodes of a distributed ledger. In some implementations, application 208 may provide a user interface via a display or other I/O device 200. User interfaces may provide a user or administrator with access to log information, configuration settings, and/or control (e.g. quarantine a suspect device, authorize canonical versions of data, or any other such controls). In some implementations, application 208 may comprise a web browser, and a user interface may comprise a web page maintained by a web server (not illustrated) stored in memory and executed by the source device 100 or accessing device 102. This may also allow access to user interfaces from source devices 100 or accessing devices 102 on a local network. In other implementations, application 208 may comprise a standalone application, such as a Java application. In some implementations, application 208 may control other output devices.

In some implementations, a source device 100 or accessing device 102 may have an encryption module 214. Encryption module 214, sometimes referred to as an encryption co-processor, a cryptographic accelerator, a secure cryptoprocessor, or a trusted platform module (TPM), may comprise hardware for efficiently performing encryption and decryption or calculation of cryptographic hash results. Encryption co-processors may be more efficient, faster, and/or use less power than general purpose processors 202 when performing encryption, as they typically have dedicated architecture for such calculations. The encryption co-processor circuitry may be an application-specific integrated circuit (ASIC) or similar circuit for performing encryption on a bit stream or data file. In other implementations, encryption module 214 may be executed by a processor 202.

Computing devices 100, 102 (as well as node(s) 104) may be identified by a device identifier (not illustrated). A device identifier may comprise an alphanumeric string, serial number, MAC address, username or account name, address, GUID, or any other type and form of identifier to distinguish a computing device from other computing devices. In many implementations, device identifier may be set by a manufacturer, while in other implementations, device identifier may be set by an administrator or user (e.g. user name).

In some implementations, a source device 100 or accessing device 102 may store data 220, which may be data of any type and form, including executable logic, applications, system libraries, configuration data, user data, or any other such data. Data may be stored encrypted or decrypted, compressed or uncompressed, and may be both compressed and encrypted prior to transmission to a ledger node (in many implementations).

To encrypt the data, an encryption module 214 may generate a public key 222 and private key 224 pair (e.g. for public key encryption). In some implementations, the encryption module 214 may also generate an access key 226. Keys 222, 224, 226 may be in any data format, and may frequently comprise elliptic curve key pairs, RSA key pairs, or any other type and form of encryption and/or decryption keys. In some implementations, public key 222 may serve as access key 226. In other implementations, access key 226 may comprise a random number or string, a user or account name or identifier, a device identifier, or any other type of data. As discussed above, in many implementations, data 220 may be encrypted via public key 222 and provided to a distributed ledger or smart contract for storage, along with either the public key 222 or an access key 226 for authentication and/or association with the data for subsequent retrieval. Private key 224 may be maintained for subsequent retrieval and decryption of the data, and/or may be provided to another device (e.g. accessing device 102).

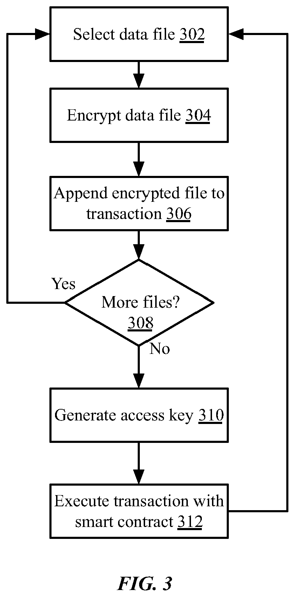

FIG. 3 is a flow chart of an embodiment of a method 300 for secure storage of data within a distributed ledger system. Portions of method 300 may be performed by one or more source devices, and/or by other devices such as accessing devices 102. For example, in some implementations, a first source device 100 may perform a first portion of method 300 (e.g. steps 302-308) while a second source device 100 may perform a second portion of method 300 (e.g. steps 310-312). For example, a first source device 100 may comprise an administrator or master device provided or maintained by a manufacturer of software or firmware, while a second source device 100 may comprise a device deployed as a gateway to a LAN. In other implementations, a single device may perform all of the steps of method 300.

At step 302, a source device may select a data file for processing and storage in the distributed ledger. The data file may be any type and form of data file. In some implementations, the data file may be selected based on how crucial the data file is to operations of the computing device. For example, the source device may select firmware, operating system libraries or configuration data, or other such data for storage. In other implementations, the data file may be selected from user files, e.g. documents or configuration files generated by or modified by a user. In some other implementations, data files may be selected based on use (e.g. recent use or modification, frequency of use or modification, etc.).

At step 304, the source device may encrypt the data file using a first key (e.g. public key of a key pair). In some implementations, the data file may be encrypted by a cryptographic coprocessor of the device. In some implementations, the device may first compress the data file prior to encrypting the data file to reduce storage and bandwidth requirements, as well as processing and transactions costs of the ledger system.

At step 306, the source device may append the encrypted file to a transaction or request for transmission to nodes of the distributed ledger for storage. In some implementations, multiple encrypted data files may be concatenated or stored together in a single transaction or request. In other implementations, each data file may be provided to the ledger in a separate request. In implementations in which multiple encrypted data files may be concatenated or grouped together, at step 308, the source device may determine if additional files should be processed for storage. If so, steps 302-308 may be repeated iteratively for each file.

At step 310, in some implementations, the source device may generate an access key. As discussed above, the access key may comprise a random string, device identifier, user account, or any other such data. In other implementations, the access key may comprise the public key used to encrypt data at step 304.

At step 312, the source device may provide the transaction or a request to execute the transaction to a node of a distributed ledger. The transaction or request may comprise the encrypted data and the public key and/or access key, as discussed above. Receipt of the request may cause the node to generate a record comprising the encrypted data at an address corresponding to the public key and/or access key; or may cause the node to provide the public key and/or access key and encrypted data as variables to a smart contract executed by the node during processing of a block.

As discussed above, the data may be retrieved by any device with the access key and/or public key by generating a similar transaction or request, in some implementations. In other implementations, the data may be retrieved by retrieving a copy of the ledger or a portion of the ledger and extracting the encrypted data based on the access key address. The data may be decrypted using the private key obtained separately.

Accordingly, the systems and methods discussed herein provide for a secure storage of encrypted data in a distributed, immutable ledger. The data cannot be modified or corrupted by malicious attackers without such changes being immediately apparent, and the distributed nature of the ledger provides redundancy and scalability.

In one aspect, the present disclosure is directed to a method for secure storage of data via distributed ledgers. The method includes encrypting, by a processor of a first device, one or more files in a storage device maintained by the first device using a first key. The method includes generating, by a processor of the first device, an access key. The method also includes transmitting, by the first device to a second device operating as a full node for a distributed immutable ledger, the encrypted one or more files and the access key. The method also includes providing, by the first device to a third device, the access key and the first key, the third device configured to retrieve the encrypted one or more files from the distributed immutable ledger via the access key, and decrypt the one or more files using the first key.

In some implementations, the method includes collecting the one or more files, by the first device from one or more additional devices. In some implementations, the one or more files comprise configuration files. In some implementations, the method includes encrypting the one or more files by an encryption coprocessor of the first device. In some implementations, the method includes generating the first key and a second key, the first key and second key used for encrypting the one or more files. In some implementations, the access key comprises a user identifier. In some implementations, the method includes transmitting the encrypted one or more files and the access key to the second device, receipt of the encrypted one or more files and the access key causing the second device to append the encrypted one or more files to the distributed immutable ledger at an address corresponding to the access key. In some implementations, the first key comprises the access key.

In another aspect, the present disclosure is directed to a system for secure storage of data via distributed ledgers. The system includes a first device, comprising an encryption module, a network interface, and a storage device comprising one or more files, a first key, and a second key. The encryption module is configured to: encrypt one or more files in a storage device maintained by the first device using a first key, and generate an access key. The network interface is configured to: transmit, to a second device operating as a full node for a distributed immutable ledger, the encrypted one or more files and the access key, and provide, to a third device, the access key and the first key, the third device configured to retrieve the encrypted one or more files from the distributed immutable ledger via the access key, and decrypt the one or more files using the first key.

In some implementations, the network interface is further configured for collecting the one or more files from one or more additional devices. In some implementations, the one or more files comprise configuration files. In some implementations, the encryption module comprises a hardware encryption coprocessor. In some implementations, the encryption module is configured to generate the first key and a second key, the first key and second key used for encrypting the one or more files. In some implementations, the access key comprises a user identifier. In some implementations, the access key comprises the first key. In some implementations, the network interface is further configured to transmit the encrypted one or more files and the access key to the second device, such that receipt of the encrypted one or more files and the access key causes the second device to append the encrypted one or more files to the distributed immutable ledger at an address corresponding to the access key.

The present disclosure is also directed to systems and methods for secure storage of hashes in a distributed ledger system. In some implementations, computing devices may receive periodic updates to firmware and software, including system files, anti-virus libraries, configuration files, or other such data. These updates are frequently intended to fix security flaws or holes in prior versions of the firmware or software, provide new features, increase efficiency of the computing device, or otherwise improve the operation of the device. The updates may be received from management servers, administrators, device or software manufacturers, operating system manufacturers, or elsewhere. In some implementations, updates may be downloaded directly from a source server (e.g. a manufacturer's server). In other implementations, updates may be downloaded from a third party source (e.g. cloud storage service provider, app store, or other such source). In still other implementations, updates may be provided via a peer-to-peer distribution system, such as via a BitTorrent network. These various distribution systems may have varying levels of trust: for example, one typically may trust a manufacturer to provide proper updates, while one may be less trusting of an update provided by a peer-to-peer network. However, even a manufacturer's servers may be compromised by malicious actors, either remotely or locally (e.g. a rogue employee). Accordingly, regardless of how the update is obtained, it may be corrupted or compromised, and installation may infect the computing device with malicious software or malware. This could result in adverse effects from data loss, "bricking" of a device or making it non-operational, "ransomware" or encryption of user data with decryption keys held hostage, data exfiltration, etc.

Accordingly, the present disclosure provides an independent system by which a device may verify data, including updates to applications, firmware, operating system libraries or other such data. This may be done through the use of a distributed ledger system to provide a secure anti-tamper mechanism for software and firmware updates that may be independently accessed and verified by any device. Distributed ledger systems, sometimes referred to as block chains, are online data storage systems with cryptography-based architecture providing links between records stored in "blocks". Each block contains a hash of a previous block, providing a chain of linked blocks that are immutable: any alteration of a record changes the hash of the subsequent block, which changes the hash of the next subsequent block, etc. Accordingly, any modification of data is easily detectable.

Although typically discussed with records indicating transactions between users, block chains may be used to store any type of data, either in raw form or encrypted. In some implementations, block chains may include executable code that is processed by computing devices, sometimes referred to as nodes or miners, during each iteration of the block chain. This code may be sometimes referred to as a smart contract. Transactions and/or smart contracts (along with other data, parameters, etc.) may be provided to a node. The node may process the contracts and record the transactions to a ledger, along with the cryptographic hash of the previous block, and distribute the new resulting block to other nodes in the network.

Thus, a smart contract used herein may maintain a data array with hash values (e.g. MD5, SHA256, or any other such hash type) and associated index entries corresponding to identifiers of data (e.g. firmware versions, software versions, device identifiers, etc.). For example, the results of cryptographic hash functions applied to inputs of system or firmware updates provided by a trusted server may be stored in the records, or, in some implementations, any other type of data. Hashes may be used to reduce the length of data stored in the ledger, as larger amounts of storage require generation of new blocks, which may be computationally expensive (for example, various block chain systems may place a limit on processing, storage, and bandwidth per block).

Other devices, sometimes referred to as client devices, may receive the updates (e.g. from a server, cloud storage provider, peer-to-peer network, etc.), generate corresponding hash results, and compare the results to those stored in the ledger system to verify that the received updates have not been compromised by malicious attackers or man-in-the-middle attacks or otherwise corrupted. Even if the trusted server is subsequently compromised, the immutable nature of the ledger system prevents an attacker from modifying the recorded hashes to deceive client devices into executing malware.

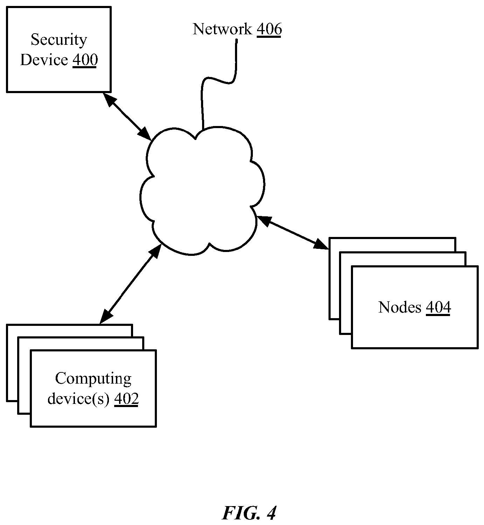

For example, referring first to FIG. 4, illustrated is a computing environment comprising a security device 400, computing devices 402 (referred to generally as client devices, clients, local or internal devices, server devices, servers, host devices, hosts, or computing devices 402), and nodes 404 (sometimes referred to as full nodes, miners, pools, or by other such terms), via one or more networks 406).

Security device 400, sometimes referred to as a secure device, a trusted device (although this trust may be temporary, such as instances where the security device is subsequently compromised), security server, manufacturer device, or by other such terms, may comprise a computing device that is configured to receive or produce an initial version of data or executable code to be distributed to computing device(s) 402, to generate a cryptographic hash of the data or code, and generate a transaction or execute a smart contract to write the cryptographic hash of the data or code to a ledger of a distributed ledger system (e.g. via a node 404). In many implementations, a security device 400 may be a network security device, such as a switch, router, or gateway providing security services to a home network (e.g. deployed as an intermediary between a first network 406 and a second network 406 (not illustrated) to which computing device(s) 402 are connected). Security device 400 may thus provide security functions to a home network, business network, or local area network (LAN), such as a firewall, packet inspection and/or filtering, network address translation, caching, acceleration, or any other such features. In other implementations, a security device 400 may be a trusted server of a manufacturer or software or firmware provider, and may be an update server, online store, cloud data provider, or other such entity. Security device 400 may provide security through verification and validation of updates via hashes in a distributed ledger, as discussed above.

Security device 400 may comprise a hardware device, such as an appliance, desktop computer, rackmount computer, laptop computer, or any other such device. In some implementations, security device 400 may comprise a virtual device executed by a physical computing device, such as a virtual appliance executed by a physical machine having a hypervisor. Security device 400 may comprise one or more devices, such as a server farm, cluster, or cloud.

In some implementations, network 406 may be provided by a security device 400, such as via a built-in network switch, WiFi access point, etc. In other implementations, one or more network management devices (not illustrated) may be connected to a security device 400 and provide network 406. For example, a network management device, such as a router, gateway, WiFi access point, or other such device, may be an intermediary between security device 400 and network 406, and may provide functionality for network 406 and communications to one or more computing devices, security sensors automation devices, and/or appliances or consumer devices. Accordingly, in some implementations, communications to networked devices from security device 400 may flow through network management devices. Security device 400 may accordingly also provide security for network management devices (e.g. protection from unauthorized access to configuration or control functions, etc.).

As discussed above, security devices 400 may receive trusted or original versions of software and/or firmware updates, applications, system libraries, or any other such data. These versions may be referred to as canonical versions, official versions, master versions, or by other such names. The trusted or canonical version may be explicitly or manually trusted by an administrator or manufacturer of the data, or may be digitally signed (e.g. by a certificate authority) to establish a chain of trust. To provide for secure distribution of the data, the security device 400 may generate a hash of the data by performing a hashing algorithm on the data, such as MD5 or SHA256, or any other suitable hashing algorithm. A hashing algorithm may be considered suitable if it has few or no collisions for the corresponding amount of input data, or if it provides a unique hash result for any input data within the set of potential input data. Depending on the size of the data, different algorithms may be utilized. The security device 400 may generate a transaction for the ledger system or remote procedure call to be executed by a node 404 executing a smart contract to write the hash result into the ledger. The result may be written to the ledger along with an identifier of the data (e.g. software name, version, manufacturer name, unique code such as a universal product code (UPC) or unique resource identifier (URI), or other such identifiers). In some implementations, the security device may generate a request to execute a transaction, the request comprising the identifier and the hash result. The hash result and the identifier may be recorded in the ledger in an array or as a parameter-value pair, and may be independently retrievable by computing devices 402.

In some implementations, a security device 400 may retrieve the trusted version of the data from a specific source, such as a manufacturer computing device or server, and then provide the data for wider distribution, e.g. via a peer-to-peer network. This may allow for efficient distribution to computing devices 402 and large scalability without burdening the manufacturer computing device or server, or the security device 400. While such distribution systems are normally prone to security holes and man-in-the-middle attacks, placing hashes of the data in the immutable distributed ledger for retrieval and comparison by computing device(s) 402 mitigates or prevents such attacks. Accordingly, the resulting update distribution system is highly scalable and secure.

Computing devices 402 may comprise any type and form of computing device, including laptop computers, desktop computers, tablet computers, wearable computers, embedded computers, video game consoles, entertainment systems, "smart" appliances such as smart televisions, smart thermostats, or any other such smart appliance, home automation appliances, energy management devices (e.g. battery backup systems, generators, power conditioners, etc.), or any other such device. In some implementations, computing devices 402 may be deployed within other devices, such as computing devices within cars (e.g. head units). Computing devices 402 may be physical devices, virtual devices executed by one or more physical devices, or a combination of physical and virtual devices. Computing devices 402 may execute software and/or firmware, and may receive updates to software and/or firmware via network 406. As discussed above, in order to verify an update, application, or other such data, a computing device 402 may retrieve or receive the data via any suitable means (e.g. downloading the data from a cloud server or a data provider, via a peer-to-peer network with data shared by other computing devices 402, etc.). The data may be identified with an identifier as discussed above (e.g. URI, UPC, version number, etc.) Prior to installing or executing the data, the computing device 402 may performing a similar hashing algorithm on the data to that performed by security device 400 (e.g. MD5, SHA256, or any other suitable hashing algorithm). In some implementations, the computing device 402 may generate a transaction or remote procedure call to retrieve the hash result from the distributed ledger via the identifier, for example when a node 404 executes a smart contract to process the transaction or RPC. In other implementations, the computing device 402 may retrieve the array or transaction corresponding to the data identifier from a node 404, and extract the hash result generated by the security device 400 for the data. In some implementations, the computing device 402 may compare the locally-generated hash value and the retrieved hash result generated by the security device 400. If the values match, then the data is identical to the canonical copy, and the computing device 402 may install or process the data. If the values do not match, then the data has been modified, corrupted, or compromised. The computing device 402 may notify an administrator or user, may discard the data, and/or may take other mitigation actions (e.g. generating a backup of user data or configurations, locking the system, identifying other device(s) that provided the data as potentially compromised, etc.).

In a similar implementation, a security device 400 may periodically request hashes of data, software, firmware, system libraries or other data stored on computing devices 402. For example, a security device 400 acting as a gateway to a LAN may request hashes of firmware or other data from devices attached to the local area network. The security device 400 may compare the hashes to hashes of canonical versions of the data stored in the distributed ledger (e.g. performing the same retrieval and comparison steps as the computing devices 402 in the implementations discussed above). If the hashes do not match, then the corresponding device or devices providing the hashes may be compromised or corrupted. The security device 400 may perform mitigation actions, such as preventing communications from said devices from being transmitted off the LAN or between the device and other devices on the LAN, notifying a user or administrator, etc. If the hashes do match, then in some implementations, the security device 400 may record a device identifier of the providing device or devices to the ledger as a trusted device (e.g. using a similar technique to recording hashes as discussed above). This can allow other devices to look up device identifiers within the ledger to determine whether a device can be trusted (e.g. whether it safe to exchange data with the device, execute or process data from the device, etc.), by using a similar retrieval technique to those discussed above (e.g. retrieving transactions or arrays, providing a remote procedure call to a smart contract, etc.). Device identifiers may be hashed in some implementations for privacy and obfuscation, and/or to prevent spoofing of trust indications within the ledger. Thus, such implementations can create a scalable, distributed trust authority allowing any device to verify the identity and status of any other device, without having to use certificate authorities that may, themselves, become compromised.

As discussed above, nodes 404 may comprise computing devices used to generate blocks of the ledger, record transactions, execute smart contracts, and generate cryptographic hashes of other block data and/or block contents. Nodes 404 may each comprise one or more computing devices, such as desktop computing devices, rackmount computing devices, laptop computing devices, appliances, clusters, server farms, or any other type and form of computing devices. In many implementations, a large number of physical computing devices will be configured to operate together for generating blocks and processing transactions, e.g. as a pool or swarm.

Networks 406 may comprise any type and form of network, including a local area network (LAN), wide area network (WAN) such as the Internet, a wireless network, a cellular network, a satellite network, a cable network, or any combination of these or other networks. Additional devices not illustrated may be deployed on networks 406, including switches, gateways, routers, firewalls, or other such devices. Computing devices 400, 402, 404 may comprise any type and form of computing device, including desktop computers, laptop computers, tablet computers, smart phones, smart televisions, game consoles, wearable computers, networked devices or appliances such as IoT devices, server computers, workstations, or any other type and form of networked computing device, and may be variously referred to as servers, clients, hosts, remote devices, local devices, or by any other such name.

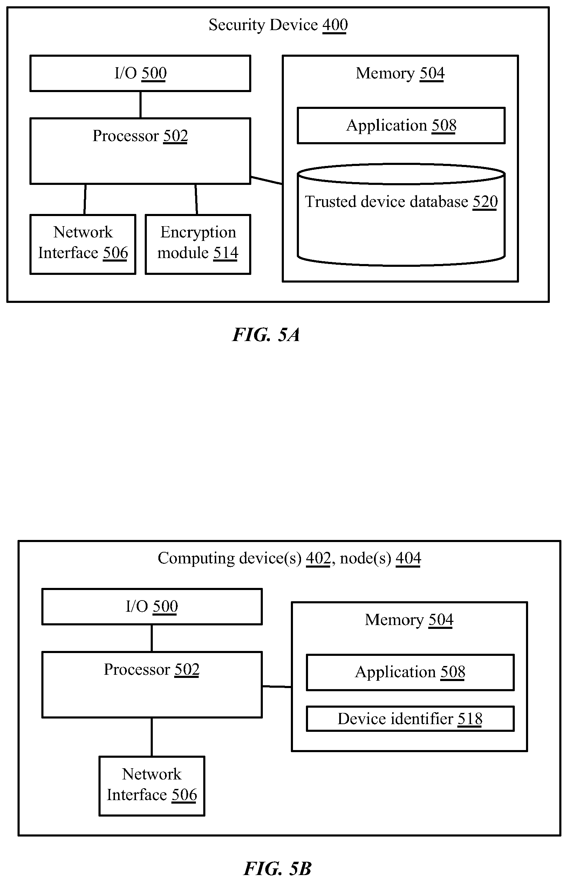

FIGs. 5A-5B are block diagrams of embodiments of servers and computing devices, such as security devices 400, computing devices 402, and nodes 404. Referring first to FIG. 5A, illustrated is a first implementation of a security device 400. As discussed above, a security device 400 may comprise a laptop computer, desktop computer, wearable computer, portable computer, smart phone, tablet computer, rack mount computer, blade server, appliance, or any other type and form of device. In some implementations, a security device 400 may not include all of elements 500-520 illustrated, or may include a plurality of any of elements 500-520 or other elements. For example, in one implementation, a security device 400 may comprise a plurality of network interfaces 506. Furthermore, although illustrated as a single device, in many implementations as discussed above, a security device 400 may comprise a plurality of security devices 400 in communication via a network, such as a separate switch and firewall, or any other combination of these or other devices. In some implementations, a security device 400 may comprise a virtual device or virtual machine, executed by a physical machine.

A security device 400 may include one or more processors 502. A processor 502 may comprise a central processing unit (CPU), microprocessor, application-specific instruction-set (ASIC) processor, or any other type and form of processor for receiving, analyzing, filtering, blocking, modifying, and/or retransmitting packets, and processing sensor signals and applying correlation rules. A processor 502 may communicate with one or more network interfaces 506, which may comprise any type and form of network interfaces, such as a physical interface (e.g. Ethernet, fiber optic interface, or any other such interface), a wireless interface (e.g. 802.11a, 802.11b, 802.11.g, 802.11n, 802.11ac, Bluetooth, cellular, or any other such interface), or a virtual or abstract interface (e.g. physical transport of storage, or "SneakerNet"), or any other such type and form of interface. Network interfaces 506 may be used for receiving and transmitting packets, as well as performing many types of data extraction and processing on the packets. Network interfaces 506 may communicate with computing devices 402 and nodes 404 via a network 406 (not illustrated), which may comprise any type and form of network or networks, including a LAN and/or WAN such as the Internet. For example, in many implementations, a security device 400 may connect to a first LAN, which may connect to the Internet, which may further connect to a second LAN connected to client devices. Accordingly, a network may comprise one or more of a physical network, an Ethernet network, a satellite network, a wireless network, a cellular network, or any other network or combination of networks, and may further comprise one or more devices including gateways, firewalls, network accelerators, proxies, switches, hubs, routers, WiFi access points, load balancers, or any other such devices.

Although a network interface may typically refer to computer networks or even packet-based networks, a network may also refer to serial or parallel connections to sensors, relays, motors, or other security devices. Accordingly, as shown, in many implementations network interface 506 may also refer to serial connections, GPIO connections, as well as WiFi interfaces, Bluetooth interfaces, Ethernet interfaces, power line communications interfaces, or other interfaces not illustrated. In other implementations, some or all of these features may be provided separately from network interface 506.

A network interface may include a network stack, which may comprise processing and functionality for a plurality of layers of the stack, including a physical layer, network layer, transport layer, session layer, presentation layer, application layer, or any other such layers. The network stack may comprise routines for encapsulating and de-encapsulating headers and payloads of packets at various layers, and may provide functionality for one or more protocols at any layer of the network stack.

A security device 400 may execute a packet processing engine, which may be part of the network interface 506 or network stack, or may be executed separately by a processor 502. A packet processing engine may comprise an application, service, server, daemon, routine, or other executable logic for processing packets, including performing network address translation, encryption, decryption, compression, decompression, modification of headers or payloads, buffering, caching, pooling, multiplexing, fragmentation or defragmentation, error correction, retransmission handling such as for a lossless protocol, or any other type and form of processing. In some implementations, a packet processing engine may extract data or identifiers from a packet for analysis and filtering, such as extracting IP addresses or ports, protocol types, QoS parameters, payload sizes, sequence numbers, or any other type and form of information.

A security device 400 may comprise one or more input/output interfaces 500. An input or output interface 500 may comprise any type and form of interface and/or connected peripherals, such as a video interface and display; a parallel or serial interface, such as a universal serial bus (USB) interface and a mouse or keyboard, or an external serial AT attachment (eSATA) interface and one or more external storage devices; or any other type and form of interface.

A security device 400 may comprise one or more memory devices 504. Memory 504 may comprise any type and form of memory or storage, including random access memory (RAM), hard drive storage, solid state drive storage, flash memory, optical or magneto-optical storage, tape storage, or any other type and form of storage device.

In some implementations, a security device 400 may execute an application 508. Application 508 may comprise an applet, server, daemon, service, routine, or other executable log for generating transactions, performing cryptographic hashing algorithms, and communicating with nodes of a distributed ledger. In some implementations, application 508 may provide a user interface via a display or other I/O device 500. User interfaces may provide a user or administrator with access to log information, configuration settings, and/or control (e.g. quarantine a suspect device, authorize canonical versions of data, or any other such controls). In some implementations, application 508 may comprise a web browser, and a user interface may comprise a web page maintained by a web server (not illustrated) stored in memory and executed by the security device 400. This may also allow access to user interfaces from computing devices 402 on a local network. In other implementations, application 508 may comprise a standalone application, such as a Java application. In some implementations, application 508 may control other output devices.

In some implementations, a security device 400 may have an encryption module 514. Encryption module 514, sometimes referred to as an encryption co-processor, a cryptographic accelerator, a secure cryptoprocessor, or a trusted platform module (TPM), may comprise hardware for efficiently performing encryption and decryption or calculation of cryptographic hash results. Encryption co-processors may be more efficient, faster, and/or use less power than general purpose processors 502 when performing encryption, as they typically have dedicated architecture for such calculations. The encryption co-processor circuitry may be an application-specific integrated circuit (ASIC) or similar circuit for performing encryption on a bit stream or data file.

Referring briefly to FIG. 5B, a computing device 402 and/or node 404 may comprise one or more of input/output interfaces 500, processors 502, memory devices 504, and/or network interfaces 506. A computing device 402 and/or node 404 may execute applications 508, as discussed above. In some implementations, a computing device 402 and/or node 404 may have an encryption module 514, while in other implementations, any encryption or decryption or hash calculation may be performed by a processor 502.

Computing devices 402 (as well as node(s) 404) may be identified by a device identifier 518. Device identifier 518 may comprise an alphanumeric string, serial number, MAC address, username or account name, address, GUID, or any other type and form of identifier to distinguish a computing device from other computing devices. In many implementations, device identifier 518 may be set by a manufacturer, while in other implementations, device identifier 518 may be set by an administrator or user (e.g. user name).

Returning to FIG. 5A, in some implementations, a security device 400 may maintain a trusted device database 520. As discussed above, in some implementations, a security device 400 may periodically poll or request hash values of software, firmware, or data from devices on a network (e.g. within a LAN for which the security device provides security and authentication operations). If the hash values match hash values of canonical versions of the software, firmware, or data stored in a distributed ledger, then the security device may add a device identifier 518 of the device (or a hash of a device identifier 518, for privacy and security) to a trusted device database 520 to identify the device as not compromised. In some implementations, the security device 400 may record the device identifier 518 or a hash of the device identifier within a record or array of the distributed ledger, similar to recording the hash values for other data. This allows any other device to retrieve or look up device identifiers 518 within the ledger to verify whether a device is trusted or potentially compromised.

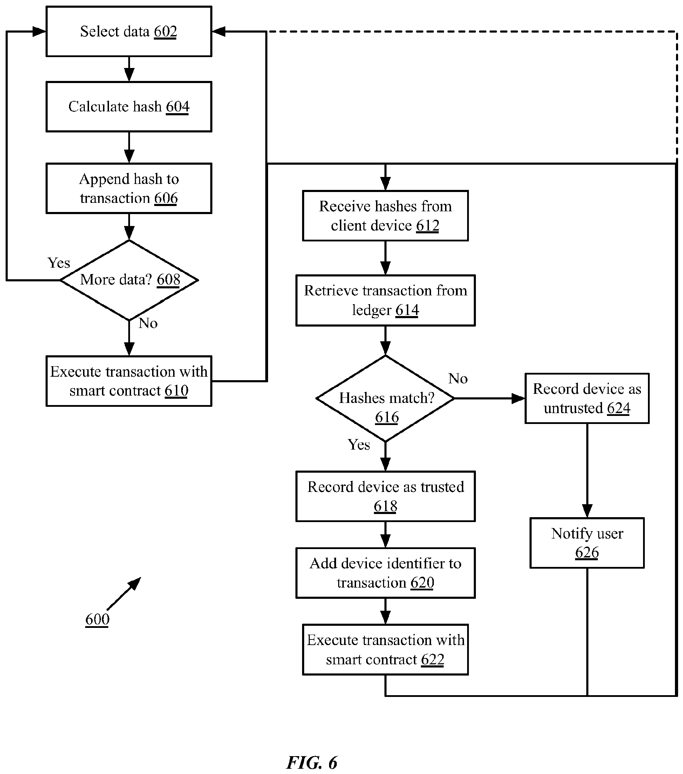

FIG. 6 is a flow chart of an embodiment of a method 600 for secure storage and verification of hashes within a distributed ledger system. Portions of method 600 may be performed by one or more security devices, and/or by other devices such as computing devices 402. For example, in some implementations, a first security device 400 may perform a first portion of method 600 (e.g. steps 602-610) while a second security device 400 may perform a second portion of method 600 (e.g. steps 612-626). For example, a first security device 400 may comprise an administrator or master device provided or maintained by a manufacturer of software or firmware, while a second security device 400 may comprise a device deployed as a gateway to a LAN. In other implementations, a single device may perform all of the steps of method 600.

At step 602, a security device may select data for processing, such as a system file, library, configuration file, firmware, user data file, or any other type and form of data file. In some implementations, data may be selected based on its functionality or relationship to crucial components of the system. For example, crucial operating system files or libraries may be selected, as modification or corruption of these files may allow a system to be compromised. In some implementations, data may be selected based on frequency of appearance in client computing systems (e.g. system files that are common to many devices may be selected, as opposed to user-specific data that may not be common to many devices). In still other implementations, data may be selected for processing when it is created or updated (e.g. new firmware, system updates, etc.).

At step 604, the security device may calculate a hash of the selected data. This may be done by a processor 502 or by an encryption co-processor 514 in various implementations. The security device may use any suitable hashing algorithm that results in few or no collisions for the input data (and may be selected based, for example, on the type and length of input data). For example, in many implementations, a Secure Hash Algorithm (SHA) may be used, such as SHA256 or SHA512.

At step 606, in some implementations, the hash may be appended to a transaction or a transaction generated from the hash. In other implementations, the security device may generate a remote procedure call or request comprising the hash. The security device may include an identifier of the selected data with the hash, such as an application name, version number, URI, or other such identifier or identifiers. In some implementations, a different transaction or request may be generated for each hash, while in other implementations, a plurality of hashes may be concatenated or included in a single transaction or request (e.g. with identifiers or predetermined strings between them, or multiplexed based on constant length, etc.). In such implementations, at step 608, the security device may determine if additional data should be processed. If so, steps 602-608 may be repeated for each additional item of data (e.g. system files, updates, libraries, firmware, etc.).

At step 610, the remote procedure call, request, or transaction may be transmitted to a node for processing. The node may write the hash value(s) and data identifier(s) to a record or array, or may provide the hash value and data identifier(s) as inputs to a smart contract executed by the node, with the output of the contract written to a record or array. The node may write other transactions or perform other executable smart contracts or code, may calculate a hash of one or more prior blocks or a present block of records, and may include the hash value(s) and identifier(s) in a new block. The new block may be broadcast to other nodes of the distributed ledger for use in processing subsequent blocks.

Steps 602-610 may be repeated, either periodically, or as new versions of canonical data are created or modified by a manufacturer or administrator or are identified as canonical by an administrator or user of the system.

At any point after at least one iteration of steps 602-610, at step 612, a security device may receive hash values from one or more client computing devices. Step 612 may be performed periodically and include transmitting or broadcasting a request (e.g. on a LAN) to other computing devices requesting hash values of data, or may include retrieving hash values for the data from the devices. In some implementations, a security device may request hash values for specified data (e.g. a particular system file, library, user data file, configuration file, firmware, or other such data) and may receive corresponding hash value(s) from the client devices. The client devices may generate the hash values locally and provide them to the security device, reducing bandwidth utilization of the LAN, and keeping the underlying data secure and not broadcast over the network.

At step 614, the security device may retrieve hash value or transaction comprising the hash value from the distributed ledger. Retrieving the hash value or transaction may comprise generating a new transaction or request comprising a remote procedure call to be executed by a node, as discussed above. The security device may transmit the request or transaction to the node or another device in communication with the node for execution. In many implementations, the security device may transmit the request or transaction to a plurality of nodes; and one or more nodes may process the request or transaction (with a node that finishes first broadcasting the result to the network). The security device may receive the result after execution by reading a subsequent block. In other implementations, the security device may retrieve a transaction corresponding to the data identifier, the transaction comprising the hash value for the canonical data.

At step 616, the security device may determine whether the hash of the canonical data retrieved from the ledger and the hash received from a client device match. Determining if the hashes match may comprise performing a bitwise XOR on the hashes.

At step 618, if the hashes match, then the security device may record the client device as a trusted device. Recording the device as trusted may comprise adding a device identifier of the device to a trusted device database, notifying other devices, and/or generating a request or transaction at step 620 to provide the distributed ledger comprising the device identifier of the client or a hash of the device identifier (e.g. for privacy and/or security). At step 622, the security device may transmit the request or transaction to the node (or broadcast the request or transaction to a plurality of nodes). Accordingly, in similar steps, other devices may subsequently receive the device identifier of a client device (e.g. as at step 612), and retrieve the ledger or transaction (e.g. as at step 614), and compare the two (or their hashes, as at step 616), in order to verify if a device should be trusted, or is compromised.

If the hashes do not match, then at step 624, in some implementations, the device may be recorded as untrusted, in a device database and/or on the ledger (as at steps 620-622). In some implementations, a user or administrator may be notified of the device's untrusted status at step 626 (e.g. via email, pop-up, or other notifications). Steps 612-626 may be repeated for additional client devices, and may also be repeated periodically to ensure that devices have not been compromised.

Accordingly, in one aspect, the present disclosure is directed to a method for distributed ledger-based secure data verification. The method includes generating, by a processor of a first device, a cryptographic hash of one or more data files in a storage device maintained by the first device. The method also includes appending, by the first device, the first cryptographic hash to a distributed immutable ledger. The method also includes receiving, by the first device from a second device, a second cryptographic hash of a second copy of the one or more data files in a storage device maintained by the second device, and a device identifier of the second device. The method further includes retrieving, by the first device from a third device operating as a full node for the distributed immutable ledger, a portion of the distributed immutable ledger comprising the first cryptographic hash. The method also includes extracting from the retrieved portion, by the first device, the first cryptographic hash. The method also includes comparing, by the first device, the first cryptographic hash and the second cryptographic hash. The method further includes, responsive to the comparison, either: (i) recording the device identifier of the second device as trusted in a device identification database maintained by the first device, if the first cryptographic hash and the second cryptographic hash match, or (ii) recording the device identifier of the second device as untrusted in the device identification database, if the first cryptographic hash and the second cryptographic hash do not match.

In some implementations of the method, generating the cryptographic hash further comprises receiving, from a service provider, a new version of a firmware file, system file, library, or application. In some implementations of the method, appending the first cryptographic hash to the distributed immutable ledger further comprises transmitting the first cryptographic hash to the third device. In a further implementation, transmitting the first cryptographic hash to the third device causes the third device to generate a block of the distributed immutable ledger comprising the first cryptographic hash. In a still further implementation, retrieving the portion of the distributed immutable ledger includes requesting the block.

In some implementations of the method, comparing the first cryptographic hash and the second cryptographic hash includes performing a bitwise exclusive-or comparison of the first cryptographic hash and the second cryptographic hash. In some implementations of the method, recording the device identifier of the second device as trusted in the device identification database, if the first cryptographic hash and the second cryptographic hash match, includes appending the device identifier of the second device to the distributed immutable hash. In some implementations of the method, appending the device identifier of the second device to the distributed immutable ledger includes transmitting the device identifier of the second device to the third device.

In another aspect, the present disclosure is directed to a system for distributed ledger-based secure data verification. The system includes a first device comprising a network interface in communication with a second device and a third device, a storage device comprising one or more data files, and a processor. The processor is configured to generate a cryptographic hash of the one or more data files in the storage device, and append the first cryptographic hash to a distributed immutable ledger. The network interface is configured to: receive, from the second device, a second cryptographic hash of a second copy of the one or more data files in a storage device maintained by the second device, and a device identifier of the second device, and retrieve, from a third device operating as a full node for the distributed immutable ledger, a portion of the distributed immutable ledger comprising the first cryptographic hash. The processor is further configured to: extract the first cryptographic hash from the retrieved portion; compare the first cryptographic hash and the second cryptographic hash; and responsive to the comparison, either: (i) recording the device identifier of the second device as trusted in a device identification database maintained by the first device, if the first cryptographic hash and the second cryptographic hash match, or (ii) recording the device identifier of the second device as untrusted in the device identification database, if the first cryptographic hash and the second cryptographic hash do not match.

In some implementations, the network interface is further configured to receive, from a service provider, a new version of a firmware file, system file, library, or application. In some implementations, the processor is further configured to append the first cryptographic hash to the distributed immutable ledger by transmitting the first cryptographic hash to the third device. In a further implementation, the transmission of the first cryptographic hash to the third device causes the third device to generate a block of the distributed immutable ledger comprising the first cryptographic hash. In a further implementation, the network interface is further configured to retrieve the portion of the distributed immutable ledger by requesting the block.

In some implementations, the processor is further configured to perform a bitwise exclusive-or comparison of the first cryptographic hash and the second cryptographic hash. In some implementations, the processor is further configured to, if the first cryptographic hash and the second cryptographic hash match, append the device identifier of the second device to the distributed immutable hash. In some implementations, the network interface is further configured to transmit the device identifier of the second device to the third device.

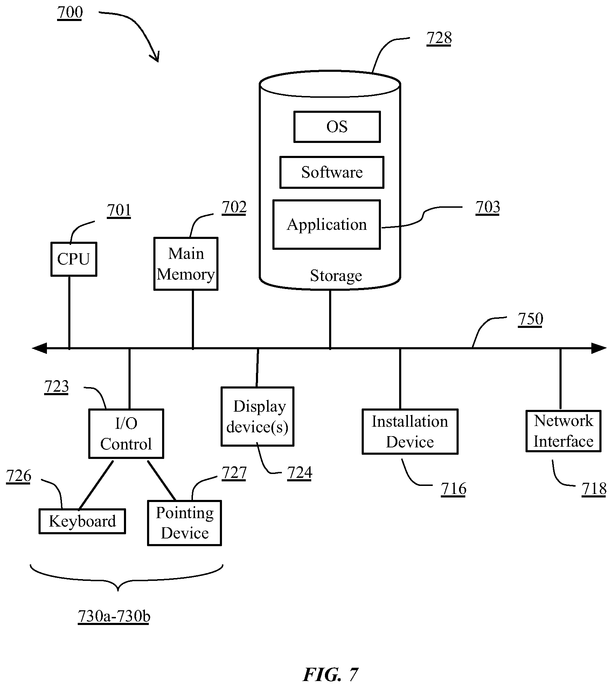

FIG. 7 is a block diagram of an exemplary computing device useful for practicing the methods and systems described herein. The various devices 400, 402, and 404 may be deployed as and/or executed on any type and form of computing device, such as a computer, network device or appliance capable of communicating on any type and form of network and performing the operations described herein. The computing device may comprise a laptop computer, desktop computer, virtual machine executed by a physical computer, tablet computer, such as an iPad tablet manufactured by Apple Inc. or Android-based tablet such as those manufactured by Samsung, Inc. or Motorola, Inc., smart phone or PDA such as an iPhone-brand / iOS-based smart phone manufactured by Apple Inc., Android-based smart phone such as a Samsung Galaxy or HTC Droid smart phone, or any other type and form of computing device.

FIG. 7 depicts a block diagram of a computing device 700 useful for practicing an embodiment of the security devices and/or client devices discussed above. A computing device 700 may include a central processing unit 701; a main memory unit 702; a visual display device 724; one or more input/output devices 730a-730b (generally referred to using reference numeral 730), such as a keyboard 726, which may be a virtual keyboard or a physical keyboard, and/or a pointing device 727, such as a mouse, touchpad, or capacitive or resistive single- or multi-touch input device; and a cache memory 740 in communication with the central processing unit 701.

The central processing unit 701 is any logic circuitry that responds to and processes instructions fetched from the main memory unit 702 and/or storage 728. The central processing unit may be provided by a microprocessor unit, such as: those manufactured by Intel Corporation of Santa Clara, California; those manufactured by Motorola Corporation of Schaumburg, Illinois; those manufactured by Apple Inc. of Cupertino California, or any other single- or multi-core processor, or any other processor capable of operating as described herein, or a combination of two or more single- or multi-core processors. Main memory unit 702 may be one or more memory chips capable of storing data and allowing any storage location to be directly accessed by the microprocessor 701, such as random access memory (RAM) of any type. In some embodiments, main memory unit 702 may include cache memory or other types of memory.

The computing device 700 may support any suitable installation device 716, such as a floppy disk drive, a CD-ROM drive, a CD-R/RW drive, a DVD-ROM drive, tape drives of various formats, USB / Flash devices, a hard-drive or any other device suitable for installing software and programs such as a server or application 703 such as a physical security application, network security application, or combination physical and network security application, or portion thereof. The computing device 700 may further comprise a storage device 728, such as one or more hard disk drives or redundant arrays of independent disks, for storing an operating system and other related software, and for storing application software programs.

Furthermore, the computing device 700 may include a network interface 718 to interface to a Local Area Network (LAN), Wide Area Network (WAN) or the Internet through a variety of connections including, but not limited to, standard telephone lines, LAN or WAN links (e.g., Ethernet, T1, T3, 56kb, X.25), broadband connections (e.g., ISDN, Frame Relay, ATM), wireless connections, (802.11a/b/g/n/ac, BlueTooth), cellular connections, or some combination of any or all of the above. The network interface 718 may comprise a built-in network adapter, network interface card, PCMCIA network card, card bus network adapter, wireless network adapter, USB network adapter, cellular modem or any other device suitable for interfacing the computing device 700 to any type of network capable of communication and performing the operations described herein.

A wide variety of I/O devices 730a-730n may be present in the computing device 700. Input devices include keyboards, mice, trackpads, trackballs, microphones, drawing tablets, and single- or multi-touch screens. Output devices include video displays, speakers, headphones, inkjet printers, laser printers, and dye-sublimation printers. The I/O devices 730 may be controlled by an I/O controller 723 as shown in FIG. 7. The I/O controller may control one or more I/O devices such as a keyboard 726 and a pointing device 727, e.g., a mouse, optical pen, or multi-touch screen. Furthermore, an I/O device may also provide storage 728 and/or an installation medium 716 for the computing device 700. The computing device 700 may provide USB connections to receive handheld USB storage devices such as the USB Flash Drive line of devices manufactured by Twintech Industry, Inc. of Los Alamitos, California.

The computing device 700 may comprise or be connected to multiple display devices 724a-724n, which each may be of the same or different type and/or form. As such, any of the I/O devices 730a-730n and/or the I/O controller 723 may comprise any type and/or form of suitable hardware, software embodied on a tangible medium, or combination of hardware and software to support, enable or provide for the connection and use of multiple display devices 724a-724n by the computing device 700. For example, the computing device 700 may include any type and/or form of video adapter, video card, driver, and/or library to interface, communicate, connect or otherwise use the display devices 724a-724n. A video adapter may comprise multiple connectors to interface to multiple display devices 724a-724n. The computing device 700 may include multiple video adapters, with each video adapter connected to one or more of the display devices 724a-724n. Any portion of the operating system of the computing device 700 may be configured for using multiple displays 724a-724n. Additionally, one or more of the display devices 724a-724n may be provided by one or more other computing devices, such as computing devices 700a and 700b connected to the computing device 700, for example, via a network. These embodiments may include any type of software embodied on a tangible medium designed and constructed to use another computer's display device as a second display device 724a for the computing device 700. One ordinarily skilled in the art will recognize and appreciate the various ways and embodiments that a computing device 700 may be configured to have multiple display devices 724a-724n.

A computing device 700 of the sort depicted in FIG. 7 typically operates under the control of an operating system, such as any of the versions of the Microsoft^{®} Windows operating systems, the different releases of the Unix and Linux operating systems, any version of the Mac OS^{®} for Macintosh computers, any embedded operating system, any real-time operating system, any open source operating system, any proprietary operating system, any operating systems for mobile computing devices, or any other operating system capable of running on the computing device and performing the operations described herein.

The computing device 700 may have different processors, operating systems, and input devices consistent with the device. For example, in one embodiment, the computer 700 is an Apple iPhone or Motorola Droid smart phone, or an Apple iPad or Samsung Galaxy Tab tablet computer, incorporating multi-input touch screens. Moreover, the computing device 700 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

It should be understood that the systems described above may provide multiple ones of any or each of those components and these components may be provided on either a standalone machine or, in some embodiments, on multiple machines in a distributed system. The systems and methods described above may be implemented as a method, apparatus or article of manufacture using programming and/or engineering techniques to produce software embodied on a tangible medium, firmware, hardware, or any combination thereof. In addition, the systems and methods described above may be provided as one or more computer-readable programs embodied on or in one or more articles of manufacture. The term "article of manufacture" as used herein is intended to encompass code or logic accessible from and embedded in one or more computer-readable devices, firmware, programmable logic, memory devices (e.g., EEPROMs, ROMs, PROMs, RAMs, SRAMs, etc.), hardware (e.g., integrated circuit chip, Field Programmable Gate Array (FPGA), Application Specific Integrated Circuit (ASIC), etc.), electronic devices, a computer readable non-volatile storage unit (e.g., CD-ROM, floppy disk, hard disk drive, etc.). The article of manufacture may be accessible from a file server providing access to the computer-readable programs via a network transmission line, wireless transmission media, signals propagating through space, radio waves, infrared signals, etc. The article of manufacture may be a flash memory card or a magnetic tape. The article of manufacture includes hardware logic as well as software or programmable code embedded in a computer readable medium that is executed by a processor. In general, the computer-readable programs may be implemented in any programming language, such as LISP, PERL, C, C++, C#, PROLOG, JavaScript, or in any byte code language such as JAVA or WebAssembly. The software programs may be stored on or in one or more articles of manufacture as object code.

FIG. 4 is a block diagram of an exemplary computing device useful for practicing the methods and systems described herein. The various devices 100, 102, and 104 may be deployed as and/or executed on any type and form of computing device, such as a computer, network device or appliance capable of communicating on any type and form of network and performing the operations described herein. The computing device may comprise a laptop computer, desktop computer, virtual machine executed by a physical computer, tablet computer, such as an iPad tablet manufactured by Apple Inc. or Android-based tablet such as those manufactured by Samsung, Inc. or Motorola, Inc., smart phone or PDA such as an iPhone-brand / iOS-based smart phone manufactured by Apple Inc., Android-based smart phone such as a Samsung Galaxy or HTC Droid smart phone, or any other type and form of computing device.

FIG. 4 depicts a block diagram of a computing device 400 useful for practicing an embodiment of the security devices and/or client devices discussed above. A computing device 400 may include a central processing unit 401; a main memory unit 402; a visual display device 424; one or more input/output devices 430a-430b (generally referred to using reference numeral 430), such as a keyboard 426, which may be a virtual keyboard or a physical keyboard, and/or a pointing device 427, such as a mouse, touchpad, or capacitive or resistive single- or multi-touch input device; and a cache memory 440 in communication with the central processing unit 401.

The central processing unit 401 is any logic circuitry that responds to and processes instructions fetched from the main memory unit 402 and/or storage 428. The central processing unit may be provided by a microprocessor unit, such as: those manufactured by Intel Corporation of Santa Clara, California; those manufactured by Motorola Corporation of Schaumburg, Illinois; those manufactured by Apple Inc. of Cupertino California, or any other single- or multi-core processor, or any other processor capable of operating as described herein, or a combination of two or more single- or multi-core processors. Main memory unit 402 may be one or more memory chips capable of storing data and allowing any storage location to be directly accessed by the microprocessor 401, such as random access memory (RAM) of any type. In some embodiments, main memory unit 402 may include cache memory or other types of memory.

The computing device 400 may support any suitable installation device 416, such as a floppy disk drive, a CD-ROM drive, a CD-R/RW drive, a DVD-ROM drive, tape drives of various formats, USB / Flash devices, a hard-drive or any other device suitable for installing software and programs such as a server or application 403 such as a physical security application, network security application, or combination physical and network security application, or portion thereof. The computing device 400 may further comprise a storage device 428, such as one or more hard disk drives or redundant arrays of independent disks, for storing an operating system and other related software, and for storing application software programs.

Furthermore, the computing device 400 may include a network interface 418 to interface to a Local Area Network (LAN), Wide Area Network (WAN) or the Internet through a variety of connections including, but not limited to, standard telephone lines, LAN or WAN links (e.g., Ethernet, T1, T3, 56kb, X.25), broadband connections (e.g., ISDN, Frame Relay, ATM), wireless connections, (802.11a/b/g/n/ac, BlueTooth), cellular connections, or some combination of any or all of the above. The network interface 418 may comprise a built-in network adapter, network interface card, PCMCIA network card, card bus network adapter, wireless network adapter, USB network adapter, cellular modem or any other device suitable for interfacing the computing device 400 to any type of network capable of communication and performing the operations described herein.

A wide variety of I/O devices 430a-430n may be present in the computing device 400. Input devices include keyboards, mice, trackpads, trackballs, microphones, drawing tablets, and single- or multi-touch screens. Output devices include video displays, speakers, headphones, inkjet printers, laser printers, and dye-sublimation printers. The I/O devices 430 may be controlled by an I/O controller 423 as shown in FIG. 4. The I/O controller may control one or more I/O devices such as a keyboard 426 and a pointing device 427, e.g., a mouse, optical pen, or multi-touch screen. Furthermore, an I/O device may also provide storage 428 and/or an installation medium 416 for the computing device 400. The computing device 400 may provide USB connections to receive handheld USB storage devices such as the USB Flash Drive line of devices manufactured by Twintech Industry, Inc. of Los Alamitos, California.

The computing device 400 may comprise or be connected to multiple display devices 424a-424n, which each may be of the same or different type and/or form. As such, any of the I/O devices 430a-430n and/or the I/O controller 423 may comprise any type and/or form of suitable hardware, software embodied on a tangible medium, or combination of hardware and software to support, enable or provide for the connection and use of multiple display devices 424a-424n by the computing device 400. For example, the computing device 400 may include any type and/or form of video adapter, video card, driver, and/or library to interface, communicate, connect or otherwise use the display devices 424a-424n. A video adapter may comprise multiple connectors to interface to multiple display devices 424a-424n. The computing device 400 may include multiple video adapters, with each video adapter connected to one or more of the display devices 424a-424n. Any portion of the operating system of the computing device 400 may be configured for using multiple displays 424a-424n. Additionally, one or more of the display devices 424a-424n may be provided by one or more other computing devices, such as computing devices 400a and 400b connected to the computing device 400, for example, via a network. These embodiments may include any type of software embodied on a tangible medium designed and constructed to use another computer's display device as a second display device 424a for the computing device 400. One ordinarily skilled in the art will recognize and appreciate the various ways and embodiments that a computing device 400 may be configured to have multiple display devices 424a-424n.

A computing device 400 of the sort depicted in FIG. 4 typically operates under the control of an operating system, such as any of the versions of the Microsoft^{®} Windows operating systems, the different releases of the Unix and Linux operating systems, any version of the Mac OS^{®} for Macintosh computers, any embedded operating system, any real-time operating system, any open source operating system, any proprietary operating system, any operating systems for mobile computing devices, or any other operating system capable of running on the computing device and performing the operations described herein.

The computing device 400 may have different processors, operating systems, and input devices consistent with the device. For example, in one embodiment, the computer 400 is an Apple iPhone or Motorola Droid smart phone, or an Apple iPad or Samsung Galaxy Tab tablet computer, incorporating multi-input touch screens. Moreover, the computing device 400 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

It should be understood that the systems described above may provide multiple ones of any or each of those components and these components may be provided on either a standalone machine or, in some embodiments, on multiple machines in a distributed system. The systems and methods described above may be implemented as a method, apparatus or article of manufacture using programming and/or engineering techniques to produce software embodied on a tangible medium, firmware, hardware, or any combination thereof. In addition, the systems and methods described above may be provided as one or more computer-readable programs embodied on or in one or more articles of manufacture. The term "article of manufacture" as used herein is intended to encompass code or logic accessible from and embedded in one or more computer-readable devices, firmware, programmable logic, memory devices (e.g., EEPROMs, ROMs, PROMs, RAMs, SRAMs, etc.), hardware (e.g., integrated circuit chip, Field Programmable Gate Array (FPGA), Application Specific Integrated Circuit (ASIC), etc.), electronic devices, a computer readable non-volatile storage unit (e.g., CD-ROM, floppy disk, hard disk drive, etc.). The article of manufacture may be accessible from a file server providing access to the computer-readable programs via a network transmission line, wireless transmission media, signals propagating through space, radio waves, infrared signals, etc. The article of manufacture may be a flash memory card or a magnetic tape. The article of manufacture includes hardware logic as well as software or programmable code embedded in a computer readable medium that is executed by a processor. In general, the computer-readable programs may be implemented in any programming language, such as LISP, PERL, C, C++, C#, PROLOG, JavaScript, or in any byte code language such as JAVA or WebAssembly. The software programs may be stored on or in one or more articles of manufacture as object code.

## Claims

1. A method for distributed ledger-based secure data verification, comprising:
generating, by a processor of a first device, a first cryptographic hash of one or more data files in a storage device maintained by the first device;
appending, by the first device, and via a third device operating as a full node for the distributed ledger, the first cryptographic hash to a distributed immutable ledger;
receiving, by the first device from a second device, via a Local Area Network (LAN) network, a second cryptographic hash of a second copy of the one or more data files in a storage device maintained by the second device, and a device identifier of the second device,
retrieving, by the first device from the third device operating as a full node for the distributed immutable ledger, a portion of the distributed immutable ledger comprising the first cryptographic hash;
extracting from the retrieved portion, by the first device, the first cryptographic hash;
comparing, by the first device, the first cryptographic hash and the second cryptographic hash;
responsive to the comparison indicating that the first cryptographic hash and the second cryptographic hash do not match,
recording the device identifier of the second device as untrusted in a device identification database, if the first cryptographic hash and the second cryptographic hash do not match; and
responsive to recording the device identifier as untrusted in the device identification database, performing, by the first device, a mitigation action comprising preventing communications from the second device from being transmitted on the LAN.

2. The method of claim 1, wherein generating the first cryptographic hash further comprises receiving, from a service provider, a new version of a firmware file, system file, library, or application.

3. The method of claim 1, wherein appending the first cryptographic hash to the distributed immutable ledger further comprises transmitting the first cryptographic hash to the third device.

4. The method of claim 3, wherein transmitting the first cryptographic hash to the third device causes the third device to generate a block of the distributed immutable ledger comprising the first cryptographic hash.

5. The method of claim 4, wherein retrieving the portion of the distributed immutable ledger further comprises requesting the block.

6. The method of claim 1, wherein comparing the first cryptographic hash and the second cryptographic hash comprises performing a bitwise exclusive-or comparison of the first cryptographic hash and the second cryptographic hash.

7. The method of claim 1, wherein recording the device identifier of the second device as trusted in the device identification database, if the first cryptographic hash and the second cryptographic hash match, further comprises appending the device identifier of the second device to the distributed immutable ledger.

8. The method of claim 7, wherein appending the device identifier of the second device to the distributed immutable ledger further comprises transmitting the device identifier of the second device to the third device.

9. A system for distributed ledger-based secure data verification, comprising:
a first device comprising a network interface in communication with a second device and a third device, a storage device comprising one or more data files, and a processor;
wherein the processor is configured to:
generate a first cryptographic hash of the one or more data files in the storage device, and
append the first cryptographic hash via the third device operating as a full node for the distributed ledger, to a distributed immutable ledger;
wherein the network interface is configured to:
receive, from the second device, via a Local Area Network (LAN), a second cryptographic hash of a second copy of the one or more data files in a storage device maintained by the second device, and a device identifier of the second device, and
retrieve, from the third device operating as a full node for the distributed immutable ledger, a portion of the distributed immutable ledger comprising the first cryptographic hash;
wherein the processor is further configured to:
extract the first cryptographic hash from the retrieved portion,
compare the first cryptographic hash and the second cryptographic hash, and
responsive to the comparison indicating that the first cryptographic hash and the second cryptographic hash do not match:
recording the device identifier of the second device as untrusted in the device identification database; and
responsive to recording the device identifier as untrusted in the device identification database, performing, by the first device, a mitigation action comprising preventing communications from the second device from being transmitted on the LAN.

10. The system of claim 9, wherein the network interface is further configured to receive, from a service provider, a new version of a firmware file, system file, library, or application.

11. The system of claim 9, wherein the processor is further configured to append the first cryptographic hash to the distributed immutable ledger by transmitting the first cryptographic hash to the third device.

12. The system of claim 11, wherein transmitting the first cryptographic hash to the third device causes the third device to generate a block of the distributed immutable ledger comprising the first cryptographic hash.

13. The system of claim 12, wherein the network interface is further configured to retrieve the portion of the distributed immutable ledger by requesting the block.

14. The system of claim 9, wherein the processor is further configured to perform a bitwise exclusive-or comparison of the first cryptographic hash and the second cryptographic hash.

15. The system of claim 9, wherein the processor is further configured to, if the first cryptographic hash and the second cryptographic hash match, append the device identifier of the second device to the distributed immutable ledger.

16. The system of claim 9, wherein the network interface is further configured to transmit the device identifier of the second device to the third device.

## Patentansprüche

1. Ein Verfahren zur auf verteiltem Ledger basierten sicheren Datenverifikation, das Folgendes beinhaltet:
Erzeugen, durch einen Prozessor einer ersten Vorrichtung, eines ersten kryptografischen Hashs einer oder mehrerer Datendateien in einer Speichervorrichtung, die von der ersten Vorrichtung unterhalten wird;
Anhängen, durch die erste Vorrichtung und über eine dritte Vorrichtung, die als vollständiger Knoten für das verteilte Ledger arbeitet, des ersten kryptografischen Hashs an ein verteiltes unveränderliches Ledger;
Empfangen, durch die erste Vorrichtung von einer zweiten Vorrichtung über ein lokales Netzwerk (LAN), eines zweiten kryptografischen Hashs einer zweiten Kopie der einen oder mehreren Datendateien in einer Speichervorrichtung, die von der zweiten Vorrichtung unterhalten wird, und einer Vorrichtungskennung der zweiten Vorrichtung, Abrufen, durch die erste Vorrichtung von der dritten Vorrichtung, die als vollständiger Knoten für das verteilte unveränderliche Ledger arbeitet, eines Teils des verteilten unveränderlichen Ledgers, der den ersten kryptografischen Hash beinhaltet;
Extrahieren, aus dem abgerufenen Teil durch die erste Vorrichtung, des ersten kryptografischen Hashs;
Vergleichen, durch die erste Vorrichtung, des ersten kryptografischen Hashs und des zweiten kryptografischen Hashs;
als Reaktion darauf, dass der Vergleich angibt, dass der erste kryptografische Hash und der zweite kryptografische Hash nicht übereinstimmen,
Aufzeichnen der Vorrichtungskennung der zweiten Vorrichtung als nicht vertrauenswürdig in einer Vorrichtungsidentifikationsdatenbank, wenn der erste kryptografische Hash und der zweite kryptografische Hash nicht übereinstimmen; und
als Reaktion auf das Aufzeichnen der Vorrichtungskennung als nicht vertrauenswürdig in der Vorrichtungsidentifikationsdatenbank, Durchführen, durch die erste Vorrichtung, einer Eindämmungsmaßnahme, die das Verhindern beinhaltet, dass Kommunikationen von der zweiten Vorrichtung auf dem LAN übertragen werden.

2. Verfahren gemäß Anspruch 1, wobei das Erzeugen des ersten kryptografischen Hashs ferner das Empfangen, von einem Dienstanbieter, einer neuen Version einer Firmwaredatei, Systemdatei, Bibliothek oder Anwendung beinhaltet.

3. Verfahren gemäß Anspruch 1, wobei das Anhängen des ersten kryptografischen Hashs an das verteilte unveränderliche Ledger ferner das Übertragen des ersten kryptografischen Hashs an die dritte Vorrichtung beinhaltet.

4. Verfahren gemäß Anspruch 3, wobei das Übertragen des ersten kryptografischen Hashs an die dritte Vorrichtung bewirkt, dass die dritte Vorrichtung einen Block des verteilten unveränderlichen Ledgers erzeugt, der den ersten kryptografischen Hash beinhaltet.

5. Verfahren gemäß Anspruch 4, wobei das Abrufen des Teils des verteilten unveränderlichen Ledgers ferner das Anfordern des Blocks beinhaltet.

6. Verfahren gemäß Anspruch 1, wobei das Vergleichen des ersten kryptografischen Hashs und des zweiten kryptografischen Hashs das Durchführen eines bitweisen Exklusiv-Oder-Vergleichs des ersten kryptografischen Hashs und des zweiten kryptografischen Hashs beinhaltet.

7. Verfahren gemäß Anspruch 1, wobei das Aufzeichnen der Vorrichtungskennung der zweiten Vorrichtung als vertrauenswürdig in der Vorrichtungsidentifikationsdatenbank, wenn der erste kryptografische Hash und der zweite kryptografische Hash übereinstimmen, ferner das Anhängen der Vorrichtungskennung der zweiten Vorrichtung an das verteilte unveränderliche Ledger beinhaltet.

8. Verfahren gemäß Anspruch 7, wobei das Anhängen der Vorrichtungskennung der zweiten Vorrichtung an das verteilte unveränderliche Ledger ferner das Übertragen der Vorrichtungskennung der zweiten Vorrichtung an die dritte Vorrichtung beinhaltet.

9. Ein System zur auf verteiltem Ledger basierten sicheren Datenverifikation, das Folgendes beinhaltet:
eine erste Vorrichtung, die eine Netzwerkschnittstelle in Kommunikation mit einer zweiten Vorrichtung und einer dritten Vorrichtung, eine Speichervorrichtung, die eine oder mehrere Datendateien beinhaltet, und einen Prozessor beinhaltet;
wobei der Prozessor für Folgendes konfiguriert ist:
Erzeugen eines ersten kryptografischen Hashs der einen oder mehreren Datendateien in der Speichervorrichtung und
Anhängen des ersten kryptografischen Hashs über die dritte Vorrichtung, die als vollständiger Knoten für das verteilte Ledger arbeitet, an ein verteiltes unveränderliches Ledger;
wobei die Netzwerkschnittstelle für Folgendes konfiguriert ist:
Empfangen, von der zweiten Vorrichtung über ein lokales Netzwerk (LAN), eines zweiten kryptografischen Hashs einer zweiten Kopie der einen oder mehreren Datendateien in einer Speichervorrichtung, die von der zweiten Vorrichtung unterhalten wird, und einer Vorrichtungskennung der zweiten Vorrichtung und
Abrufen, von der dritten Vorrichtung, die als vollständiger Knoten für das verteilte unveränderliche Ledger arbeitet, eines Teils des verteilten unveränderlichen Ledgers, der den ersten kryptografischen Hash beinhaltet;
wobei der Prozessor ferner für Folgendes konfiguriert ist:
Extrahieren des ersten kryptografischen Hashs aus dem abgerufenen Teil, Vergleichen des ersten kryptografischen Hashs und des zweiten kryptografischen Hashs und
als Reaktion darauf, dass der Vergleich angibt, dass der erste kryptografische Hash und der zweite kryptografische Hash nicht übereinstimmen:
Aufzeichnen der Vorrichtungskennung der zweiten Vorrichtung als nicht vertrauenswürdig in der Vorrichtungsidentifikationsdatenbank; und
als Reaktion auf das Aufzeichnen der Vorrichtungskennung als nicht vertrauenswürdig in der Vorrichtungsidentifikationsdatenbank, Durchführen, durch die erste Vorrichtung, einer Eindämmungsmaßnahme, die das Verhindern beinhaltet, dass Kommunikationen von der zweiten Vorrichtung auf dem LAN übertragen werden.

10. System gemäß Anspruch 9, wobei die Netzwerkschnittstelle ferner konfiguriert ist, um von einem Dienstanbieter eine neue Version einer Firmwaredatei, Systemdatei, Bibliothek oder Anwendung zu empfangen.

11. System gemäß Anspruch 9, wobei der Prozessor ferner konfiguriert ist, um durch Übertragen des ersten kryptografischen Hashs an die dritte Vorrichtung den ersten kryptografischen Hash an das verteilte unveränderliche Ledger anzuhängen.

12. System gemäß Anspruch 11, wobei das Übertragen des ersten kryptografischen Hashs an die dritte Vorrichtung bewirkt, dass die dritte Vorrichtung einen Block des verteilten unveränderlichen Ledgers erzeugt, der den ersten kryptografischen Hash beinhaltet.

13. System gemäß Anspruch 12, wobei die Netzwerkschnittstelle ferner konfiguriert ist, um den Teil des verteilten unveränderlichen Ledgers durch Anfordern des Blocks abzurufen.

14. System gemäß Anspruch 9, wobei der Prozessor ferner konfiguriert ist, um einen bitweisen Exklusiv-Oder-Vergleich des ersten kryptografischen Hashs und des zweiten kryptografischen Hashs durchzuführen.

15. System gemäß Anspruch 9, wobei der Prozessor ferner konfiguriert ist, um, wenn der erste kryptografische Hash und der zweite kryptografische Hash übereinstimmen, die Vorrichtungskennung der zweiten Vorrichtung an das verteilte unveränderliche Ledger anzuhängen.

16. System gemäß Anspruch 9, wobei die Netzwerkschnittstelle ferner konfiguriert ist, um die Vorrichtungskennung der zweiten Vorrichtung an die dritte Vorrichtung zu übertragen.

## Revendications

1. Un procédé pour la vérification de données sécurisée basée sur un registre distribué, comprenant :
la génération, par un processeur d'un premier dispositif, d'une première valeur de hachage cryptographique d'un ou de plusieurs fichiers de données dans un dispositif de stockage tenu à jour par le premier dispositif ;
l'adjonction, par le premier dispositif, et par l'intermédiaire d'un troisième dispositif fonctionnant en tant que nœud complet pour le registre distribué, de la première valeur de hachage cryptographique à un registre distribué immuable ;
la réception, par le premier dispositif en provenance d'un deuxième dispositif, par l'intermédiaire d'un réseau local (LAN), d'une deuxième valeur de hachage cryptographique d'une deuxième copie des un ou plusieurs fichiers de données dans un dispositif de stockage tenu à jour par le deuxième dispositif, et d'un identifiant de dispositif du deuxième dispositif,
la récupération, par le premier dispositif en provenance du troisième dispositif fonctionnant en tant que nœud complet pour le registre distribué immuable, d'une portion du registre distribué immuable comprenant la première valeur de hachage cryptographique ;
l'extraction à partir de la portion récupérée, par le premier dispositif, de la première valeur de hachage cryptographique ;
la comparaison, par le premier dispositif, de la première valeur de hachage cryptographique et de la deuxième valeur de hachage cryptographique ;
en réponse au fait que la comparaison indique que la première valeur de hachage cryptographique et la deuxième valeur de hachage cryptographique ne concordent pas,
l'enregistrement de l'identifiant de dispositif du deuxième dispositif comme non fiable dans une base de données d'identification de dispositif, si la première valeur de hachage cryptographique et la deuxième valeur de hachage cryptographique ne concordent pas ; et
en réponse à l'enregistrement de l'identifiant de dispositif comme non fiable dans la base de données d'identification de dispositif, la réalisation, par le premier dispositif, d'une action d'atténuation comprenant le fait d'empêcher des communications en provenance du deuxième dispositif d'être transmises sur le LAN.

2. Le procédé de la revendication 1, dans lequel la génération de la première valeur de hachage cryptographique comprend en outre la réception, en provenance d'un fournisseur de services, d'une nouvelle version d'un fichier de micrologiciel, d'un fichier système, d'une bibliothèque, ou d'une application.

3. Le procédé de la revendication 1, dans lequel l'adjonction de la première valeur de hachage cryptographique au registre distribué immuable comprend en outre la transmission de la première valeur de hachage cryptographique au troisième dispositif.

4. Le procédé de la revendication 3, dans lequel la transmission de la première valeur de hachage cryptographique au troisième dispositif amène le troisième dispositif à générer un bloc du registre distribué immuable comprenant la première valeur de hachage cryptographique.

5. Le procédé de la revendication 4, dans lequel la récupération de la portion du registre distribué immuable comprend en outre le fait de demander le bloc.

6. Le procédé de la revendication 1, dans lequel la comparaison de la première valeur de hachage cryptographique et de la deuxième valeur de hachage cryptographique comprend la réalisation d'une comparaison OU exclusif au niveau des bits de la première valeur de hachage cryptographique et de la deuxième valeur de hachage cryptographique.

7. Le procédé de la revendication 1, dans lequel l'enregistrement de l'identifiant de dispositif du deuxième dispositif comme fiable dans la base de données d'identification de dispositif, si la première valeur de hachage cryptographique et la deuxième valeur de hachage cryptographique concordent, comprend en outre l'adjonction de l'identifiant de dispositif du deuxième dispositif au registre distribué immuable.

8. Le procédé de la revendication 7, dans lequel l'adjonction de l'identifiant de dispositif du deuxième dispositif au registre distribué immuable comprend en outre la transmission de l'identifiant de dispositif du deuxième dispositif au troisième dispositif.

9. Un système pour la vérification de données sécurisée basée sur un registre distribué, comprenant :
un premier dispositif comprenant une interface réseau en communication avec un deuxième dispositif et un troisième dispositif, un dispositif de stockage comprenant un ou plusieurs fichiers de données, et un processeur ;
dans lequel le processeur est configuré pour :
générer une première valeur de hachage cryptographique des un ou plusieurs fichiers de données dans le dispositif de stockage, et
adjoindre la première valeur de hachage cryptographique, par l'intermédiaire du troisième dispositif fonctionnant en tant que nœud complet pour le registre distribué, à un registre distribué immuable ;
dans lequel l'interface réseau est configurée pour :
recevoir, en provenance du deuxième dispositif, par l'intermédiaire d'un réseau local (LAN), une deuxième valeur de hachage cryptographique d'une deuxième copie des un ou plusieurs fichiers de données dans un dispositif de stockage tenu à jour par le deuxième dispositif, et un identifiant de dispositif du deuxième dispositif, et
récupérer, en provenance du troisième dispositif fonctionnant en tant que nœud complet pour le registre distribué immuable, une portion du registre distribué immuable comprenant la première valeur de hachage cryptographique ;
dans lequel le processeur est en outre configuré pour :
extraire la première valeur de hachage cryptographique à partir de la portion récupérée,
comparer la première valeur de hachage cryptographique et la deuxième valeur de hachage cryptographique, et
en réponse au fait que la comparaison indique que la première valeur de hachage cryptographique et la deuxième valeur de hachage cryptographique ne concordent pas :
l'enregistrement de l'identifiant de dispositif du deuxième dispositif comme non fiable dans la base de données d'identification de dispositif ; et
en réponse à l'enregistrement de l'identifiant de dispositif comme non fiable dans la base de données d'identification de dispositif, la réalisation, par le premier dispositif, d'une action d'atténuation comprenant le fait d'empêcher des communications en provenance du deuxième dispositif d'être transmises sur le LAN.

10. Le système de la revendication 9, dans lequel l'interface réseau est en outre configurée pour recevoir, en provenance d'un fournisseur de services, une nouvelle version d'un fichier de micrologiciel, d'un fichier système, d'une bibliothèque, ou d'une application.

11. Le système de la revendication 9, dans lequel le processeur est en outre configuré pour adjoindre la première valeur de hachage cryptographique au registre distribué immuable par la transmission de la première valeur de hachage cryptographique au troisième dispositif.

12. Le système de la revendication 11, dans lequel la transmission de la première valeur de hachage cryptographique au troisième dispositif amène le troisième dispositif à générer un bloc du registre distribué immuable comprenant la première valeur de hachage cryptographique.

13. Le système de la revendication 12, dans lequel l'interface réseau est en outre configurée pour récupérer la portion du registre distribué immuable en demandant le bloc.

14. Le système de la revendication 9, dans lequel le processeur est en outre configuré pour réaliser une comparaison OU exclusif au niveau des bits de la première valeur de hachage cryptographique et de la deuxième valeur de hachage cryptographique.

15. Le système de la revendication 9, dans lequel le processeur est en outre configuré pour, si la première valeur de hachage cryptographique et la deuxième valeur de hachage cryptographique concordent, adjoindre l'identifiant de dispositif du deuxième dispositif au registre distribué immuable.

16. Le système de la revendication 9, dans lequel l'interface réseau est en outre configurée pour transmettre l'identifiant de dispositif du deuxième dispositif au troisième dispositif.
